# EUROPEAN PATENT APPLICATION

(11) **EP 2 560 289 A2**
(43) Date of publication of application: **20.02.2013**
(21) Application number: 12180933.9
(22) Date of filing: 17.08.2012
(51) Int. Cl.: H04B 1/52

(54) **Combining apparatus**

(30) Priority: 17.08.2011 GB 201114106
(71) Applicant: Radio Design Limited, West Yorkshire BD17 7DW (GB)
(72) Inventor: Gostling, Martin, West Yorkshire, BD17 7DW (GB); Poppleton, David, West Yorkshire, BD17 7DW (GB)
(74) Representative: Stephenson, Philip

(57) **Abstract**

The invention relates to combining apparatus and a method of use of the same in relation to use with transceivers in a wireless communication network and to allow at least two allows two BTS's to share an antenna system whilst preventing noise generated or associated with one of the BTS's which falls within the receive signal frequency band, from leaking into the receiver of the other BTS.

## Description

This invention relates to combining apparatus and a method of use thereof, and particularly for combining apparatus for use with transceivers in a wireless communication network.

A wireless communication network typically includes a plurality of cell sites which allow radio frequency signals to be transmitted to and received from mobile phone units. Each cell site typically includes a mast, at the top of which is typically mounted an antenna for transmitting and/or receiving one or more radio frequency signals and optionally a tower mounted amplifier (TMA) for amplifying the radio frequency signals. A base transceiver station (BTS) is typically located at the base of the mast and is connected via a feeder cable to the TMA. The BTS typically includes a transceiver that generates one or more radio frequency signals for transmission to a mobile phone unit, as well as receiving one or more radio frequency signals from the mobile phone unit.

There is a requirement for modern commercial wireless communication networks to provide high data rate connections to end users to support services such as video calling, internet browsing and multimedia downloading. The wireless connection between a cell site and a mobile phone unit is often the part of the network under most strain.

Historically, the wireless connections between a cell site and a mobile phone unit have been made using two or three frequency bands per region. For example, in the UK these frequency bands are at 900MHz, 1800MHz and 2100MHz. Each frequency band has also conventionally been assigned to a particular technology; the 900MHz and 1800MHz bands have typically been licensed for second generation (2G) system use only, and the 2100MHz band has been licensed for third generation (3G) system use. As 3G systems support higher data rates than 2G systems, the licenses for frequency bands previously restricted to 2G systems only have now been amended to allow 3G systems and potentially fourth generation (4G) systems to be deployed within them. In addition, further bandwidth is being made available via freeing up additional frequency bands. For example, spectrum freed up by the move from analogue to digital television has created an available frequency band within Europe at 800MHz. Mobile communication operators therefore need to invest significant amounts of money in their networks to provide the latest technologies in multiple bands whilst continuing to support legacy technology/band combinations. Consequently, mobile communication operators are under pressure to reduce capital expenditure (CAPEX) and operating expenditure (OPEX) wherever possible in their wireless communication networks.

A significant opportunity for cost saving for a mobile communication operator is sharing of network infrastructure. A single operator can share infrastructure between equipment operating in different bands or operating in the same band and utilising different technologies (e.g. 2G and 3G). Alternatively, infrastructure can be shared between two different operators. Infrastructure sharing provides CAPEX savings as less infrastructure needs to be bought and it delivers OPEX savings as operators pay rental for cell sites and infrastructure that resides on them, such as cabinets, masts and antennae.

Typically, a BTS at a cell site is needed for each frequency band, each operator and each technology. A common cell site configuration comprises splitting the area to be covered by the wireless communications network into three 120 degree sectors, with each sector serviced by an antenna configuration that provides a pair of statistically independent reception and/or transmission paths to the mobile phone units. There are several methods for producing such an antenna configuration including spatial diversity and X-polarised antennas. The feeder cables, TMAs and antennae are often referred to as an antenna system. In all cases the antenna systems will have a pair of ports, each port associated with one of the statistically independent paths. Within each sector the cell site may transmit on one or both antenna ports but it will receive on both. The use of two statistically independent paths for receiving a signal is referred to as receive diversity and improves the sensitivity of the BTS receiver. Receiver sensitivity directly impacts the cell site coverage and capacity.

Conventionally, operators have shared the cell location and also the mast, and this is known as passive sharing since none of the electrical (active) equipment is shared. Passive sharing can apply to a single operator utilising the site and mast to transmit and receive in two or more frequency bands or transmit and receive two signals associated with two or more different technologies. Alternatively, passive sharing can apply to two or more operators sharing the site and mast. A form of active sharing has been for an operator to share the antenna system between two different frequency bands. This is possible by using a combiner to multiplex the signals to/from the BTSs that are operating in different frequency bands and to use an antenna that is sufficiently broad band. Such a combiner is simple to implement as the different bands are located at significantly different frequencies and therefore a significant guard band (the frequency range between two pass bands) exists between the frequency bands. However, such combiners do not facilitate sharing within a single frequency band and therefore prohibit an antenna system being shared between two BTSs operating in the same frequency band.

To provide combining apparatus that allows two BTSs that operate in a single frequency band to share an antenna system is challenging as the guard band between the operating radio frequencies of the BTSs can be small. The impact of a small guard band is to reduce the isolation between input ports of the combining apparatus. This will result in transmitter noise generated by one BTS, falling within the receive band, leaking through the combining apparatus into the other BTS, thereby desensitising its receiver and reducing its coverage and uplink capacity.

An alternative to combining apparatus is to use hybrid combiners or 3dB combiners. Such combiners are broad band and do not have frequency specific paths within them. However, they have the significant disadvantage that they dissipate half (3dB) of the signal power that passes through them. This is extremely inefficient and significantly impacts the coverage and capacity of a cell site. In addition, the isolation between input ports of hybrid combiners can be low.

A further issue for combining apparatus relates to the installation process of the radio communications infrastructure. The installation requires the connection of many cables and it is often the case that during the installation and commissioning of a cell site one or more cables will be connected to incorrect ports. It is important that all ports can survive high power transmit signals regardless of whether the high power transmit signals are present at the port during intended operation or not. For example, many ports are intended for low power receive signals and are internally connected to delicate electronic devices that will be permanently damaged if exposed to high power transmit signals. Significant amounts of equipment are damaged as a result of incorrect connection of low power receive ports with high power transmit signal cables and therefore it is important to provide adequate protection in the combining apparatus against this error.

An example of known combining apparatus that attempts to overcome the abovementioned problems is disclosed in WO2009/079701 This apparatus attempts to provide a means of combining GSM or 2G and UTMS or 3G network signals in a shared methodology providing improved isolation. The apparatus includes a first transmission section, and a first receiver section including a first filter module coupled to a first splitter to provide first and second receive paths. The apparatus also includes a second transmission section, and a second receiver section including a second filter module coupled to a second splitter to provide third and fourth receive paths. Each of the first, second, third and fourth receive paths include at least one filter element. The first transmission section and first receiver section can be coupled to a first antenna port. The second transmission section and second receiver section can be coupled to a second antenna port. A first base station can be coupled with the first transmission section and the first and third receive paths. A second base station can be coupled with the second transmission section and the second and fourth receive paths. A problem with this known combining apparatus is that background noise or spurious emissions from the first base station can leak into the transmit/receive ports of the second base station, thereby decreasing the receiver sensitivity of the second base station.

It is therefore an aim of the present invention to provide combining apparatus that overcomes the above mentioned problems.

It is a further aim of the present invention to provide a method of using combining apparatus that overcomes the above mentioned problems.

According to a first aspect of the present invention there is provided combining apparatus, said apparatus including a first transmit section, a first receive section including a first receive filtering means, a first splitter means located downstream of said first receive filtering means and said first splitter means providing first and second receive paths, said apparatus further including a second transmit section, a second receive section including a second receive filtering means, a second splitter means located downstream of said second receive filtering means and said second splitter means providing third and fourth receive paths, **characterised in that** at least one of the first or second receive paths and at least one of the third or fourth receive paths include at least one isolation means.

The advantage of providing isolation means in at least one of the first or second receive paths and in at least one of the third or fourth receive paths is that it prevents noise generated by a transceiver or BTS associated with one of the first or second transmit/receiver sections, falling within the receive band, to leak into the receiver of another transceiver or BTS associated with the other of the first or second transmit/receiver sections. A further advantage of the isolation means of the present invention is that it protects the first and/or second receive sections from incorrect connection of a transmit signal carrying cable (or high power signal cable) to a port that, under intended operating conditions, is designed only to receive low power receive signals.

Thus, the present invention utilises the advantages of providing a split in the receive signal path to allow two BTSs operating in the same frequency band to transmit on different antenna ports but for both of these antenna ports to be used for the receive path for two BTSs, whilst preventing noise in the receive band leaking into one of the transceivers or BTSs and protecting the combining apparatus from incorrect installation. In the present invention each transceiver or BTS can utilise the same antenna system and maintain receiver diversity. This has the advantage of reducing capex (less antennae) and opex (effective cell sharing and smaller masts requiring smaller sites).

In one embodiment isolation means are provided in the first, second, third and fourth receive paths.

In one embodiment the first transmission section and first receiver section are coupled to first antenna port means and the second transmission section and second receiver section are coupled to second antenna port means.

Preferably each transceiver or BTS typically has two ports associated with the same. In one embodiment one of these ports is a transmit/receive port and the other port is a receive diversity port.

In use of the combining apparatus in one embodiment, the transmit signal from a first transceiver or BTS travels from the transmit/receive port along the first transmit section to the first antenna port. The one or more signals received by the first antenna port travel through the first receive filtering means and are divided by the first splitter means. A portion of the receive signal from the first antenna port passes to the transmit/receive port of the first transceiver or BTS. A further portion of the receive signal from the first antenna port passes to the receive diversity port of the second transceiver or BTS. At least a first isolation means is provided downstream of the first splitter means and upstream of the receive diversity port. In one embodiment a second or further isolation means is provided downstream of the first splitter means and upstream of the transmit/receive port of the first transceiver or BTS.

The transmit signal from the second transceiver or BTS travels from the transmit/receive port along the second transmit section to the second antenna port. The signals received by the second antenna port travel through the second receive filtering means and is divided by the second splitter means. A portion of the receive signal from the second antenna port passes to the transmit/receive port of the second transceiver or BTS. A further portion of the receive signal from the second antenna port passes to the receive diversity port of the first transceiver or BTS. At least one isolation means or a third isolation means is provided downstream of the first splitter means and upstream of the receive diversity port. In one embodiment a fourth or further isolation means is provided downstream of the splitter means and upstream of the transmit/receive port of the second transceiver or BTS.

The splitter means can be any means or electronic component capable of dividing a receive signal in the receive signal path. This division of the receive signal can be equal or unequal as required.

The isolating means can be any means capable of allowing a signal and/or energy to travel through the same substantially in one direction only.

In one embodiment two or more isolation means are provided in series in a particular receive path. For example, two or more isolation means could be provided downstream of the first splitter means and upstream of the receive diversity port.

In a first embodiment first isolation means are provided downstream of the first splitter means and upstream of the receive diversity port in the second receive path and second isolation means are provided downstream of the second splitter means and upstream of the receive diversity port in the fourth receive path. In this embodiment third receive filtering means are located downstream of the first splitter means in the first receive path and fourth filtering means are located downstream of the second splitter means in the third receive path.

In the above first embodiment further or fifth filtering means can optionally be provided in the second receive path downstream of the first isolation means and upstream of the receive diversity port and/or further or sixth filtering means can optionally be provided in the fourth receive path downstream of the second isolation means and upstream of the receive diversity port. If no filtering means are provided downstream of the isolation means, these isolation means are typically higher power isolation means.

In a second embodiment first isolation means are provided downstream of the first splitter means and upstream of the receive diversity port in the second receive path and second isolation means are provided downstream of the second splitter means and upstream of the receive diversity port in the fourth receive path. In this embodiment third receive filtering means are located downstream of the first splitter means in the first receive path and fourth filtering means are located downstream of the second splitter means in the third receive path. In addition, third isolation means are provided in the first receive path downstream of the first splitter means and upstream of the third receive filtering means. Fourth isolation means are provided in the third receive path downstream of the second splitter means and upstream of the fourth filtering means.

In the above second embodiment further or fifth filtering means can optionally be provided in the second receive path downstream of the first isolation means and upstream of the receive diversity port and/or further or sixth filtering means can optionally be provided in the fourth receive path downstream of the second isolation means and upstream of the receive diversity port. If no filtering means are provided downstream of the isolation means, these isolation means are typically higher power isolation means.

In a third embodiment isolation means are provided only in the first and the third receive paths. These isolation means are located downstream of the first and second splitter means and, if the third and fourth receive filtering means are optionally provided, upstream of the third and fourth receive filtering means. In this embodiment the second and fourth receive paths can include no isolation and no filtering means or each of the second and fourth receive paths could optionally include receive filtering means.

In one embodiment third and/or fourth transmission sections can be provided. The third transmission section can be coupled to the first antenna port means and/or first or second transceiver or BTS. The fourth transmission section can be coupled to the second antenna port means and/or the first or second transceiver or BTS.

In one embodiment amplification means can be provided in the first and/or second receive sections. The amplification means is typically any device which allows amplification or gain of an incoming signal. The amplification means could include one or a number of amplification stages.

Bypass circuitry can be associated with the amplification means to allow the receive signal to bypass the amplification means in the event of failure of the amplification means or failure of a power supply to the amplification means.

Preferably the splitter means are located downstream of the bypass circuitry to allow the receive signal to be divided at the splitter means or junction in accordance with the present invention.

Preferably the amplification means are located between the first receive filtering means and the first splitter means and/or the second receive filtering means and the second splitter means. However, the amplification means could be provided within or as part of the splitter means. Alternatively, the amplification means could be provided downstream of the first and/or second splitter means in the first and/or second receive sections respectively.

Preferably the amplification means is a low noise amplifier and/or the like. A low noise amplifier is one which has a relatively small impact on the signal to noise ratio of the incoming signal.

Preferably power means are provided with or associated with said amplification means. The power means typically powers at least the amplification means and could be used to power one or more other components if required.

Preferably the power means is a Direct Current (DC) power supply.

Preferably the power supply is provided from the first and/or second transceiver or BTS.

In one embodiment the combining apparatus is provided in a housing. The housing is formed of such material and design to be substantially weatherproof to withstand external environmental conditions. The housing could be attached to, detachably attached to or integrally formed with an antenna with which the combining apparatus is used.

In one embodiment the combining apparatus is provided with mounting means for mounting it to a suitable support structure. The mounting means can include any or any combination of one or more brackets, nuts and bolts, screws, jubilee clips and/or the like. The support structure could be a mast, tower, a suitable surface of a building and/or the like.

The combining apparatus could be provided with alarm means for signalling a fault of one or more components within the apparatus, such as the amplification means. The alarm means in one example can be a modulated low frequency carrier that transmits an alarm signal to the transceiver or BTS.

The combining apparatus typically has at least two transmit/receive ports, the receive and transmit paths typically are coupled or multiplexed to each port at either end thereof. Preferably four transmit/receive ports are provided. This coupling could take place via a common junction, common transformer and/or the like. A transmit/receive port is typically located close to the transceiver or BTS or downstream of the splitter means of the first and/or third receive paths; a further transmit/receive port is typically located close to the antenna or upstream of the splitter means of the receive path(s).

In one embodiment the combining apparatus typically has at least two receive diversity ports, the second and fourth receive paths are coupled to said receive diversity ports.

In one embodiment the combining apparatus is a dual unit or multi-unit in that there are at least two separate or independent transmit paths or sections and at least two separate or independent receive paths or sections.

The filtering means in the transmit section can be any suitable filtering means which allows transmit frequency signals to pass through it but which substantially attenuates at least some other frequencies to a greater extent. Preferably the filter means is a bandpass filter means.

The receive filtering means can be any suitable filtering means which allows receive frequency signals to pass through them but which substantially attenuates at least some other frequencies to a greater extent. Preferably the filter means is a bandpass filter means.

Preferably a bias tee is provided in the combining apparatus. The bias tee directs the DC power supply, and further preferably directs the DC power supply to the amplification means, without substantially effecting transmit or receive signals. The bias tee is preferably located adjacent the input/output port of the apparatus nearest to the transceiver or BTS.

In one embodiment a wireless communication system includes two transceiver or base transceiver stations (BTSs), a mast and an antenna system. Preferably the antenna system supports transmission and/or reception via two statistically independent paths.

According to a further aspect of the present invention there is provided a method of using combining apparatus.

According to a yet further aspect of the present invention there is provided a cell site arrangement including combining apparatus.

According to an aspect of the present invention there is provided an antenna system including combining apparatus.

Detailed embodiments of the present invention will now be described with reference to the accompanying figures, wherein:
Figure 1 illustrates a prior art example of a typical cell site arrangement for a wireless communication network;
Figure 2 illustrates a prior art example of a typical cell site arrangement with two BTSs, a shared mast and separate antenna systems;
Figures 3a-d illustrate simplified views of combining apparatus according to first, second, third and fourth embodiments of the present invention respectively;
Figure 4 shows an example of the combining apparatus in figures 3a or 3b used in a cell site arrangement;
Figure 5 illustrates a simplified view of combining apparatus according to a further embodiment of the present invention;
Figure 6 shows an example of the combining apparatus in figure 5 used in a cell site arrangement;
Figure 7 illustrates a simplified view of the combining apparatus with third and fourth transmit sections included.

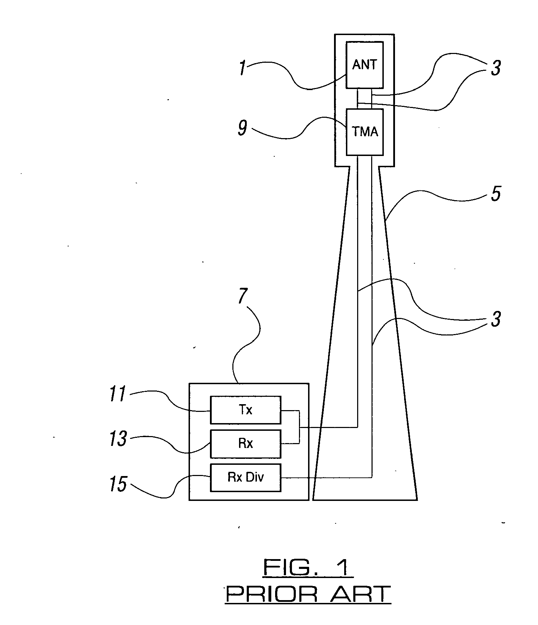

Referring firstly to figure 1, there is illustrated an example of a conventional cell site arrangement for a wireless communications network incorporating a single antenna 1 and a single BTS 7. The antenna 1 is mounted at the top of a mast 5 and has two ports, each of which is connected via cables 3 to a tower mounted amplifier 9 also located at the top of mast 5. The transceiver or BTS 7 is located at the base of the mast 5 and includes a transmitter 11, a receiver 13 and a diversity receiver 15. The transmitter 11 and receiver 13 are connected via a cable 3 to the tower mounted amplifier 9. The diversity receiver 15 is connected to the tower mounted amplifier 9 via a cable 3.

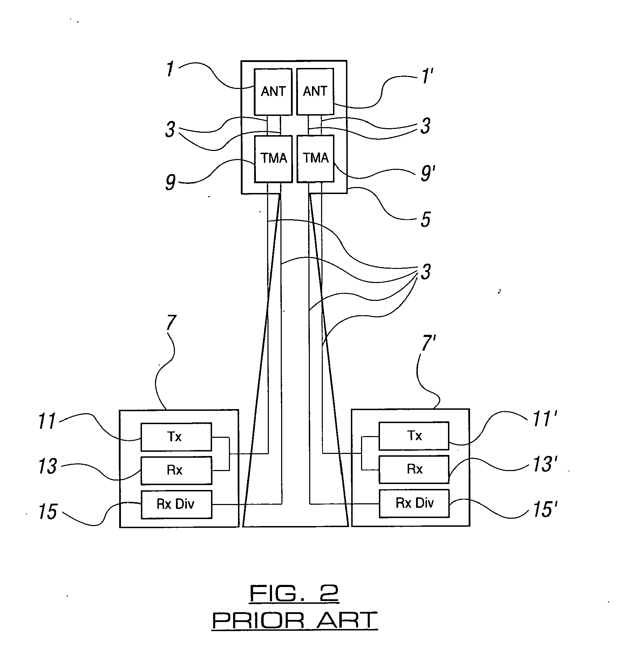

Figure 2 illustrates a further conventional cell site arrangement for a wireless communications network that includes two BTSs and two antenna systems sharing a mast. The cell site arrangement in figure 2 includes a pair of antennae 1, 1' mounted at the top of mast 5. Each antenna 1, 1' is connected via cables 3 to a tower mounted amplifier 9, 9' also located at the top of mast 5. A pair of transceivers or BTSs 7, 7' is located at the base of mast 5 and each BTS includes a transmitter 11, 11', a receiver 13, 13' and a diversity receiver 15, 15' respectively. The transmitter 11, 11' and receiver 13, 13' of each BTS is connected via a cable 3 to the tower mounted amplifiers 9, 9' respectively. The diversity receivers 15, 15' are also connected to the tower mounted amplifiers 9, 9' via cables 3.

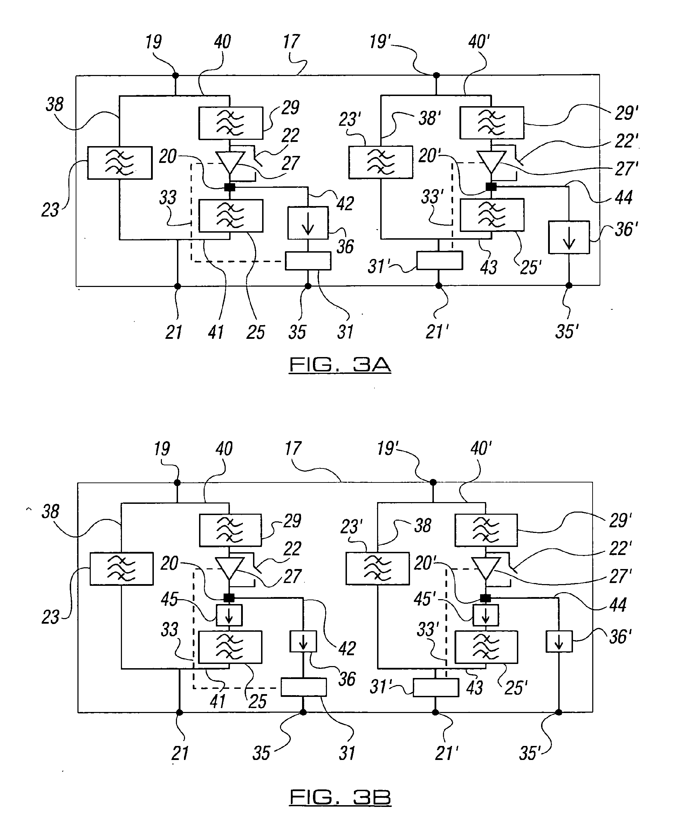

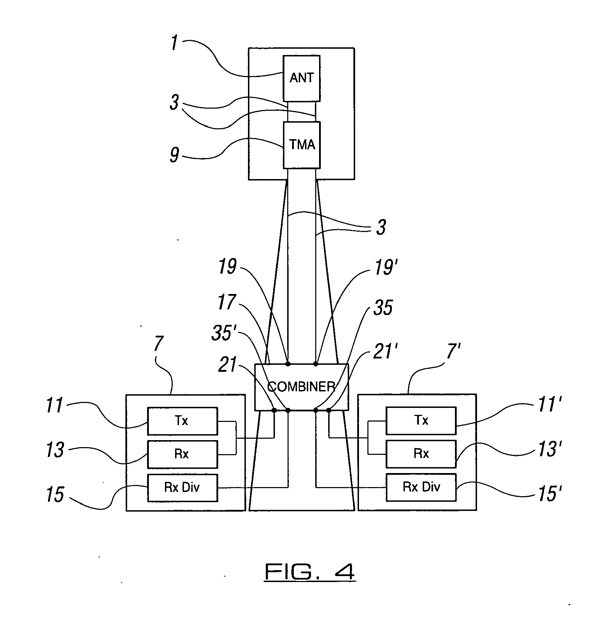

Referring to figures 3a and 4, there is illustrated combining apparatus 17 according to a first embodiment of the present invention. The combining apparatus 17 allows two BTSs 7, 7' to share a single antenna system 1 that operates in a single frequency band. The same reference numerals are used to define the same components shown in figures 1 and 2.

The combining apparatus 17 includes a pair of input/output ports 19, 19' that are connected to antenna 1 via feeder cables 3 and a pair of input/output ports 21, 21' that are connected to first and second BTSs 7, 7' via cable 3. First and second transmit paths 38, 38' are defined in the apparatus 17 for the transmission of one or more radio frequency transmit signals from the first and second BTSs 7, 7' to the antenna 1 and a transmit filter 23, 23' is located in each transmit path 38, 38' for filtering the one or more transmit signals. The first and second transmit paths 38, 38' are provided between the input/output ports 19, 21 and 19', 21' of the combining apparatus 17 respectively.

Receive paths 40, 40' are defined in the combining apparatus 17 for receiving one or more radio frequency receiver signals from antenna 1 and a receive filter 29, 29' is provided in each path 40, 40' for filtering the one or more receive signals. A splitter 20, 20' is provided in each receive path 40, 40' located downstream of receiver filter 29, 29' for splitting receive path 40 into first and second receive paths 41, 42 and for splitting receive path 40' into third and fourth receive paths 43, 44. Receive paths 40, 40' are connected to input/output ports 19, 19' of combining apparatus 17, first receive path 41 is connected to input/output port 21 for passing one or more receive signals to receiver 13 of first BTS 7, second receive path 42 is connected to output port 35 for passing one or more receive signals to diversity receiver 15' of second BTS 7', third receive path 43 is connected to input/output port 21' for passing one or more receive signals to receiver 13' of second BTS 7' and fourth receive path 44 is connected to output 35' for passing one or more receive signals to diversity receiver 15 of first BTS 7.

A low noise amplifier 27, 27' is located between the first and second receive filters 29, 29' and the splitters 20, 20' in each receive path 40, 40' respectively for amplifying the one or more receive signals. An amplifier bypass path 22, 22' is provided between the amplifier 27, 27' and splitter 20, 20' in each receive path 40, 40' to allow the one or more receive signals to bypass the amplifier in the event of failure of or loss of power to the amplifier. A bias-tee 31, 31' is provided adjacent input/output port 35, 21' to direct a DC power supply to the amplifier 27, 27' in each receive path without substantially effecting the transmit or receive signals. A DC connection 33, 33' is provided from the bias-tee 31, 31' to the amplifier 27, 27' to provide power to the amplifier.

A third receive filter 25 is located downstream of first receive filter 29 in the first receive path 41 for filtering the one or more receive signals and for preventing one or more transmit signals from passing along the receive path 41. A fourth receive filter 25' is located downstream of second receive filter 29' in the third receive path 43 for filtering one or more receive signals and for preventing one or more transmit signals from passing along the receive third path 43.

In accordance with the present invention, isolators 36, 36' are provided downstream of splitters 20, 20' and upstream of ports 35, 35' in the second and fourth receive paths 42, 44 respectively for substantially reducing or preventing background noise from the diversity receiver 15' of second BTS 7' from leaking into the first receiver 13 of the first BTS 7, and for substantially reducing or preventing background noise from the diversity receiver 15 of first BTS 7 from leaking into the second receiver 13' of the second BTS 7' respectively.

A further embodiment of combining apparatus 17 according to the present invention is shown in figure 3b. In this embodiment, further isolators 45, 45' are provided in addition to isolators 36, 36' for substantially reducing or preventing background noise from the transmitter 11 or receiver 13 of first BTS 7 from leaking into the diversity receiver 15' of second BTS 7' and for substantially reducing or preventing background noise from the transmitter 11' of receiver 13' of second BTS 7' from leaking into the diversity receiver 15 of first BTS 7. Further isolators 45, 45' are located downstream of splitters 20, 20' and upstream of second third and fourth receive filters 25, 25' in the first and third receive paths 41, 43 respectively.

An advantage of the isolators 36, 36', 45, 45' in the above described embodiments shown in figures 3a and 3b is that it protects the receive path from high power transmit signals.

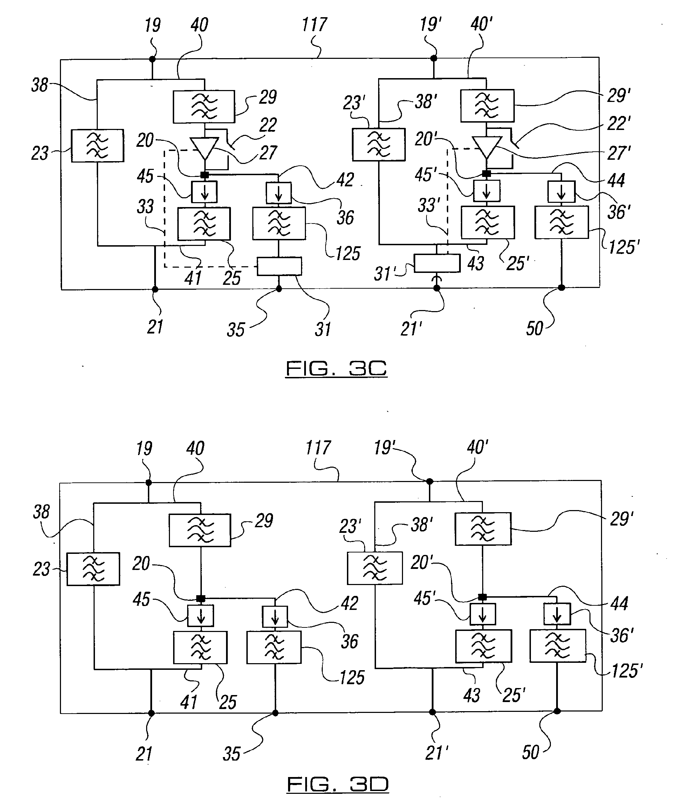

Figure 3c illustrates the arrangement of Figure 3b with additional receive filters 125 and 125' provided as shown, with filter 125 provided downstream of isolator 36 and upstream of the port 35 and filter 125' provided downstream of isolator 36' and upstream of the port 50. Figure 3d illustrates the arrangement shown in Figure 3c but with the amplifiers removed and which therefore forms another possible embodiment of the invention.

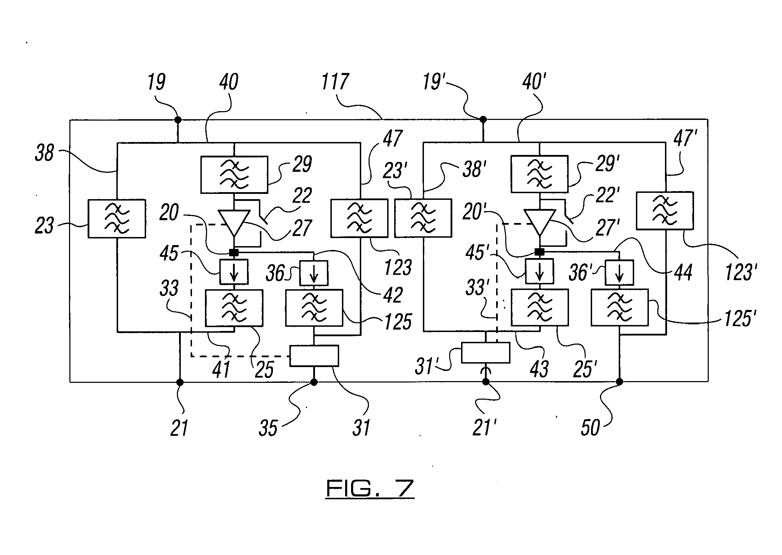

Figure 7 shows a similar arrangement to that shown in Figure 3c but in this case third and fourth transmit sections 123 and 123' are provided as part of the combining apparatus, with the third transmit section 123 coupled to the first antenna port 19 and the fourth transmit section 123' coupled to the second antenna port 19'.

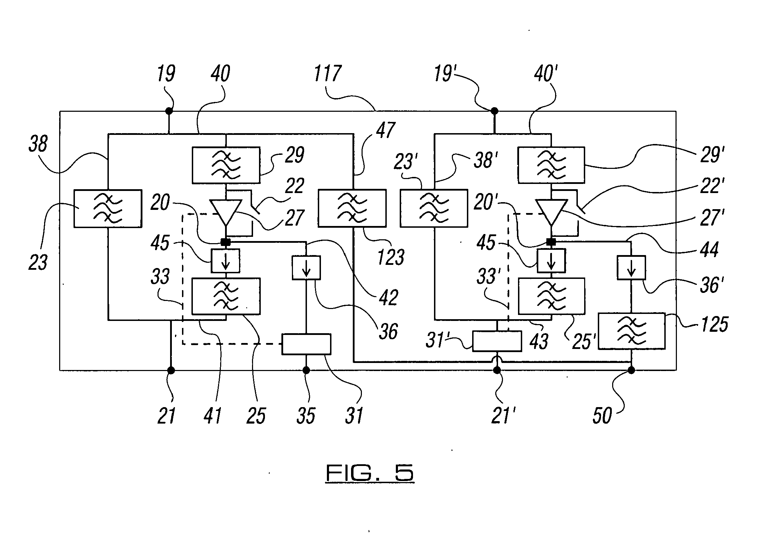

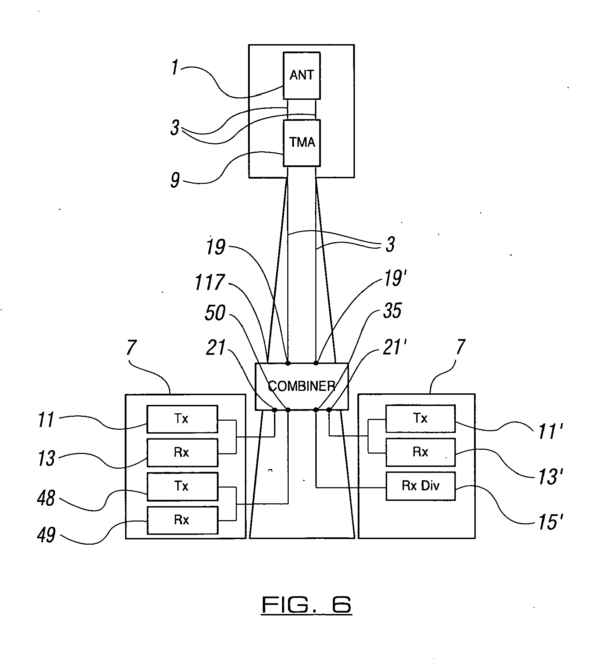

Figures 5 and 6 illustrate a yet further embodiment of the present invention in which a third transmission path 47 is provided in combining apparatus 117, together with a transmit filter 123. The provision of the additional transmission path provides the apparatus with greater transmission signal capacity. The apparatus 117 in this embodiment is similar to combining apparatus 17 shown in figures 3b and 4 but first BTS 7 has an additional transmitter 48 and receiver 49 in place of diversity receiver 15. Receiver diversity output port 35' in apparatus 17 is replaced with an input/output port 50 and the third transmission path 47 is provided between port 50 and port 19 in combining apparatus 117. Receive filter 125 is provided in the fourth receive path 44 downstream of isolator 36' and upstream of input/output port 50.

It will be appreciated by persons skilled in the art that a fourth transmission path could also be included to yet further increase the transmission signal capacity of the system. The second BTS 7' in this embodiment would be replaced with a BTS similar to BTS 7 in figure 6. The fourth transmission path could be provided between port 35 and port 19'.

Thus, the present invention provides combining apparatus that allows two BTSs to share an antenna system whilst allowing noise generated or associated with one of the BTSs, falling within the receive band, from leaking into the receiver of the other BTS.

## Claims

1. Combining apparatus, said apparatus including a first transmit section, a first receive section including a first receive filtering means, a first splitter means located downstream of said first receive filtering means and said first splitter means providing first and second receive paths, said apparatus further including a second transmit section, a second receive section including a second receive filtering means, a second splitter means located downstream of said second receive filtering means and said second splitter means providing third and fourth receive paths, **characterised in that** at least one of the first or second receive paths and at least one of the third or fourth receive paths include at least one isolation means.

2. Combining apparatus according to claim 1 **characterised in that** said isolation means prevent noise generated by a transceiver or BTS associated with one of the first or second transmit/receiver sections, falling within the receive band, to leak into the receiver of another transceiver or BTS associated with the other of the first or second transmit/receiver sections.

3. Combining apparatus according to claim 1 and/or 2 **characterised in that** said isolation means protect the first and/or second receive sections from incorrect connection of a transmit signal high power carrying cable to a port that, under intended operating conditions, is designed only to receive low power receive signals.

4. Combining apparatus according to claim 1 **characterised in that** two BTS's are provided to operate in the same frequency band with a shared antenna system.

5. Combining apparatus according to claim 1 **characterised in that** isolation means are provided in each of the said receive paths.

6. Combining apparatus according to claim 1 **characterised in that** the first transmit section and first receive section are coupled to first antenna port means and the second transmit section and second receive section are coupled to second antenna port means.

7. Combining apparatus according to claim 1 **characterised in that** the first transmit section and first receive path are coupled to first receive transmit port means, the second receive path is coupled to first receive diversity port means, and the second transmit section and third receive path are coupled to second receive transmit port means and the fourth receive path is coupled to second receive diversity port means

8. Combining apparatus according to claim 7 **characterised in that** first isolation means are provided downstream of the first splitter means and upstream of the receive diversity port in the second receive path and second isolation means are provided downstream of the second splitter means and upstream of the receive diversity port in the fourth receive path.

9. Combining apparatus according to claim 8 **characterised in that** third receive filtering means are located downstream of the first splitter means in the first receive path and fourth receive filtering means are located downstream of the second splitter means in the third receive path.

10. Combining apparatus according to claim 9 **characterised in that** fifth filtering means are provided in the second receive path downstream of the first isolation means and upstream of the receive diversity port and/or sixth filtering means are provided in the fourth receive path downstream of the second isolation means and upstream of the receive diversity port.

11. Combining apparatus according to claim 1 **characterised in that** isolation means are provided in the first and the third receive paths downstream of the first and second splitter means.

12. Combining apparatus according to claim 11 **characterised in that** the second and fourth receive paths include receive filtering means.

13. Combining apparatus according to claim 9 or 10 **characterised in that** third isolation means are provided in the first receive path downstream of the first splitter means and upstream of the third receive filtering means and fourth isolation means are provided in the third receive path downstream of the second splitter means and upstream of the fourth receive filtering means

14. Combining apparatus according to claim 1 **characterised in that** third and/or fourth transmit sections are provided with the third transmit section coupled to the first antenna port means and/or first or second transceiver or BTS and the fourth transmit section coupled to the second antenna port means and/or the first or second transceiver or BTS.

15. A wireless communication system including two transceiver or base transceiver stations (BTS's), a mast and an antenna system and combining apparatus as defined in any of the claims 1-14.

16. A method of using combining apparatus as defined in any of the claims 1-15.
